# FASCICULE DE BREVET EUROPEEN

(11) **EP 0 489 649 B1**
(45) Date de publication et mention de la délivrance du brevet: **05.07.1995**
(21) Numéro de dépôt: 91403274.3
(22) Date de dépôt: 03.12.1991
(51) Int. Cl.: G01S 7/48, G01S 3/781

(54) **Système optronique d'observation infrarouge auto-contrôlé, et nacelle de désignation laser comportant un tel système**
Selbst kalibrierendes optronisches System zur infraroten Beobachtung sowie ein richtungsweisender Korb ein solches System enthaltend
Autocalibrating optronic infrared observation system and gimballed designator comprising it

(30) Priorité: 04.12.1990 FR 9015158
(43) Date de publication de la demande: 10.06.1992
(73) Titulaire: THOMSON-CSF, 75008 Paris (FR)
(72) Inventeur: Rouchon, Jean-Marc, F-92045 Paris la Défense (FR); Ricci, Jean-Louis, F-92045 Paris la Défense (FR)
(74) Mandataire: Lincot, Georges

(56) Documents cités:
- EP-A- 0 217 692
- EP-A- 0 262 322
- US-A- 4 422 758

## Description

L'invention se rapporte au domaine de l'observation et de la formation d'images dans une bande de rayonnement infrarouge et vise, plus particulièrement, un système optronique auto-contrôlé pour l'observation dans une telle bande.

De tels systèmes optroniques, montés à bord d'un avion, effectuent une poursuite angulaire par des imageries passives de jour et de nuit, utilisant respectivement des tubes de type Vidicon ou TV pour les radiations visibles et de type FLIR ("Forward Looking Infra-Red" = Imagerie Infrarouge en terminologie anglo-saxonne) pour les radiations infrarouges.

Ces imageries permettent de donner, à des servomécanismes d'asservissement en position, des informations angulaires d'écart entre la direction de la cible et la direction de l'axe de visée. Dans les systèmes optroniques de désignation de cible par guidage par faisceau laser, la direction de l'axe de visée est de plus confondue avec l'axe d'illumination laser, la cible étant alors illuminée avec précision par le laser.

L'invention, qui s'applique à tout système optronique d'observation infrarouge, est plus précisément décrite et illustrée en application à une nacelle optronique de désignation laser à plusieurs voies optiques.

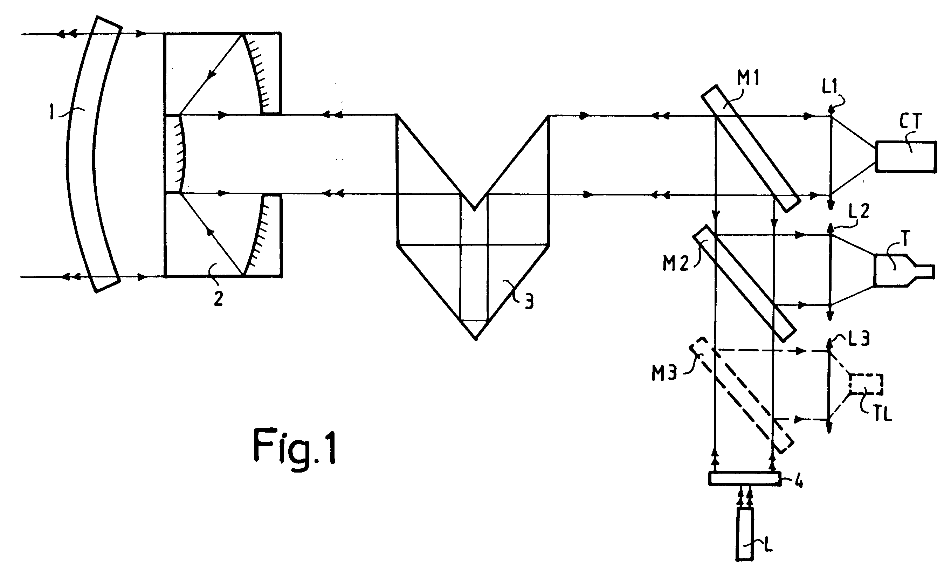

La structure opto-mécanique des nacelles de désignation laser classiques comporte typiquement, tel que schématisé à la figure 1, un hublot multispectral d'entrée 1 et une voie optique commune définie par un premier système optique de tête 2 gyrostabilisé, par exemple un montage type Cassegrain comme illustré, pour assurer un débattement angulaire suivant 2 axes (gisement/site) et un second système optique de déport d'image à 3, 4 ou 5 miroirs, pour maintenir la position finale du centre de l'image dans un plan de détection ; la séparation des voies infrarouge/visible/laser n'intervient qu'ensuite, grâce à des séparateurs M1 et M2. Eventuellement, une voie de télémétrie laser peut être prévue. Le faisceau de visée issu du laser L, et représenté par une double flèche sur la figure 1, est collimaté grâce à un adaptateur 4 avant d'être dirigé sur la voie optique commune. Le faisceau d'observation incident, représenté par une simple flèche, est analysé par focalisation sur la caméra thermique CT, le tube T et éventuellement le télémètre laser TL, après séparation (miroirs M1, M2 et M3) et focalisation (lentilles L1, L2 et L3), respectivement des voies infrarouge, visible et laser.

Ce type de structure opto-mécano-optronique, qui se retrouve par exemple dans le brevet US 3 854 821, est transportée dans un châssis configuré sous forme de nacelle cylindrique monté sous l'avion.

D'autres nacelles à voies optiques séparées ont également été réalisées, chaque voie comportant un hublot, un système optique de tête et un système optique de déport d'images.

Dans ces conditions, l'invention a pour objet un système optronique d'observation infrarouge auto-contrôlé destiné à une nacelle de désignation laser à plusieurs voies optiques, les voies étant séparées ou confondues.

Or, un système optronique d'observation infrarouge est composée d'éléments opto-mécaniques complexes et sensibles. Il est alors avantageux de tester globalement, dans une phase d'auto-contrôle préliminaire, l'ensemble des éléments mis en oeuvre sur la voie de détection infrarouge.

Un tel auto-contrôle peut être réalisé par renvoi sur le détecteur infrarouge de sa propre image. L'effet ainsi exploité (appelé "effet Narcisse") est un effet parasite habituellement combattu car donnant une image parasite se superposant à l'image utile. Un tel système optronique auto-contrôlé est connu du document EP-A-217692. Le miroir de renvoi n'est toutefois pas escamotable.

Le système optronique d'observation infrarouge auto-contrôlé selon l'invention, comprenant un hublot transparent au rayonnement dans une bande infrarouge et porté par un capot, un système optique de déflexion et de formation d'images ayant une ligne de visée perpendiculaire à cet hublot et un détecteur sensible dans la bande infrarouge, est caractérisé en ce qu'il comporte en outre un élément réfléchissant le rayonnement de ladite bande infrarouge monté sur le même capot et des moyens de basculement du capot de façon à positionner l'élément réfléchissant perpendiculairement à la ligne de visée pour effectuer l'auto-contrôle par renvoi de l'image du photodétecteur sur lui-même.

L'invention a également pour objet une nacelle de désignation de cible par guidage laser comportant un tel système d'observation infrarouge auto-contrôlé.

D'autres caractéristiques et avantages de la présente invention apparaîtront à la lecture de la description qui suit, en regard des figures annexées qui représentent :
- la figure 1, un schéma montrant les différents organes d'un système connu de désignation laser à voie optique commune (déjà commentée) ;
- les figures 2a, 2b et 2c, la structure du dispositif d'auto-contrôle selon l'invention, pour un système de désignation laser à plusieurs voies optiques selon un premier plan de coupe respectivement avant et après basculement du capot suiveur (figure 2a et 2b) et selon un plan de coupe orthogonal au précédent (figure 2c) ;
- la figure 3, un schéma représentant les différents organes contrôlés par le système selon l'invention et ses moyens constituant un tel dispositif.

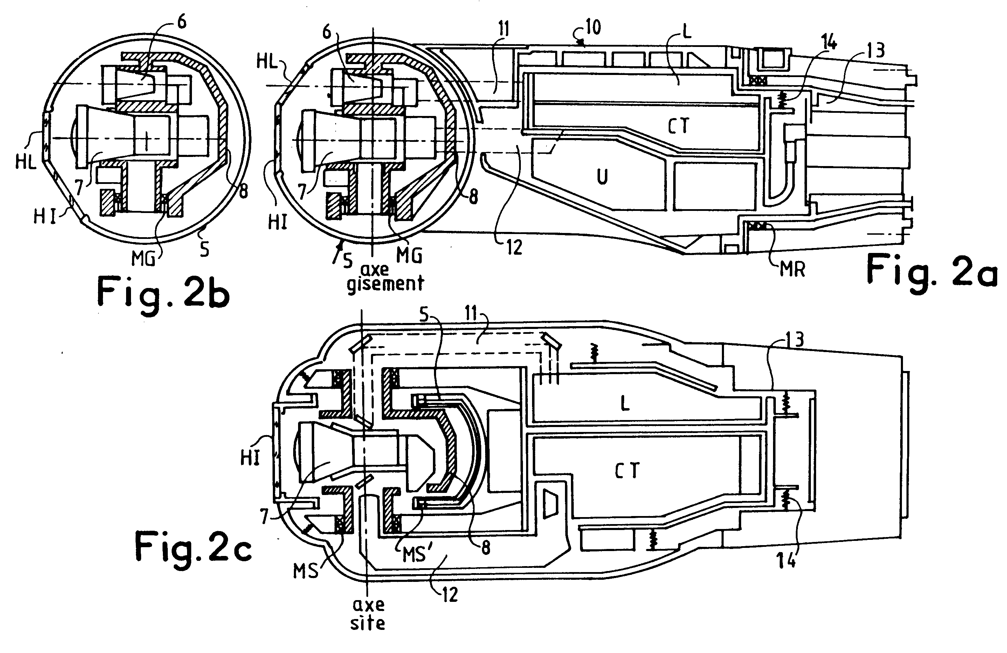

Les figures 2a, et 2c mettent en évidence la structure d'une nacelle de désignation laser à plusieurs voies optiques équipée d'un système optronique d'observation infrarouge auto-contrôlé selon l'invention, ces deux figures correspondant à des plans de coupe orthogonaux.

Dans cette structure, la chaîne de visée/détection de cible de type connu, se compose :
- d'un capot suiveur sphérique 5 sur lequel sont montés deux hublots HL et HI d'entrée en regard de deux têtes optiques afocales 6 et 7 de déviation de la ligne de visée pour respectivement la voie visible/laser et la voie infrarouge. Ces deux têtes 6 et 7 sont montées superposées à l'intérieur du capot 5 sur un même carter 8 en déplacement site/gisement grâce à des moteurs MS et MG ; d'autres moteurs site/gisement MS′et MG′ synchronisés aux moteurs de déplacement du carter 8 assurent le suivi de déplacement du capot suiveur 5 ;
- d'un corps 10 comprenant deux ensembles optiques de déport d'image 11 et 12 composés de miroirs de renvoi et de focalisation disposés respectivement sur la voie visible/laser et sur la voie infrarouge, un banc optique constitué d'une part d'une source de visée laser L et éventuellement d'un tube d'imagerie visible (non représenté) et d'autre part d'une caméra thermique CT. L'ensemble de ces éléments est suspendu grâce à des amortisseurs 14 à l'intérieur de l'enveloppe 10 et rattaché à une fusée roulis assurant un déplacement roulis de l'ensemble opto-mécanique grâce au moteur annulaire MR. Le hublot HI, la tête optique afocale 7, l'ensemble optique de déport 12 et le détecteur infrarouge forment le système optronique d'observation infrarouge de la nacelle.

La structure de la nacelle de désignation permet de protéger complètement les éléments opto-mécaniques des contraintes extérieures (vibration, effets thermodynamiques) du fait du positionnement de la suspension et permet également, par la combinaison des mouvements roulis/site, de défléchir les lignes de visée (visée laser et imageries visible/infrarouge) dans pratiquement tout l'espace.

L'auto-contrôle du système optronique d'observation infrarouge est réalisé par interposition, dans le trajet optique infrarouge, d'un élément réfléchissant pour renvoyer, sur le détecteur infrarouge, sa propre image par application de l'effet Narcisse. L'image détectée est analysée électroniquement et observée sur un système de visualisation.

L'élément réfléchissant peut être un élément escamotable, tel qu'un miroir pivotant qui viendrait s'interposer sur le trajet optique de la voie infrarouge. Cependant, la mise en place et la présence d'un tel miroir pose de nombreux problèmes : structure porteuse mobile supplémentaire, système d'entraînement et de commande de cette structure, encombrement, positionnement précis du miroir, etc... Dans le mode de réalisation représenté, le système optronique d'observation infrarouge fait intervenir comme élément escamotable un élément monté sur le capot de la nacelle à deux voies infrarouge et laser, à savoir son hublot d'entrée laser. L'utilisation d'un tel hublot évite les problèmes soulevés : dans la phase d'auto-contrôle, le capot est basculé comme illustré par la figure 2b qui représente uniquement le capot d'entrée et les éléments qu'il contient ; le hublot HL est positionné perpendiculairement à l'axe optique du système afocal d'entrée de la voie infrarouge par l'envoi, à l'unité de commande U, d'une valeur de consigne commandant le déplacement angulaire adéquat du capot suiveur 5 à l'aide du moteur site MS′du capot suiveur. Par auto-collimation du faisceau lumineux sur le hublot HL, la propre image froide du détecteur infrarouge peut ainsi être analysée sur un fond plus chaud. Une telle rotation du capot suiveur, désynchronisée de la rotation des moyens de déviation optique, est prévue pour intervenir dans d'autres circonstances en mettant en oeuvre ces mêmes moyens de basculement : ainsi, lorsque la nacelle n'est pas opérationnelle, les hublots peuvent être positionnés vers l'arrière afin d'être protégés (environnement hostile, pluvio-érosion, ...).

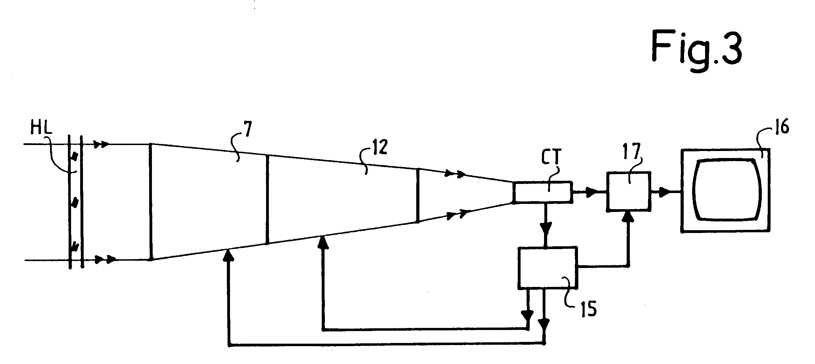

Les moyens pour analyser l'image du détecteur dans cette phase d'auto-contrôle sont illustrés en référence à la figure 3 ; ils comportent par connexion à la caméra thermique CT :
- d'une part, un système d'écartométrie 15 qui calcule l'écart entre la position idéale, dans le système, de l'image du détecteur infrarouge et sa position réelle ;
- d'autre part, un écran de visualisation 16 après passage du signal provenant de la caméra CT dans un circuit électronique de conversion en mode vidéo 17, cet écran 16 permettant un contrôle visuel de l'image du détecteur infrarouge par rapport au reste de l'image grâce à la différence importante de température.

Ainsi tout défaut ou déformation des systèmes optiques de commande de la ligne de visée (optiques de déport d'image et de focalisation 12) d'une part, et tout défaut des systèmes électroniques (caméra thermique CT, circuit de traitement vidéo 17) d'autre part, est détecté.

La première série de défauts d'ordre optique est mise en évidence par les écarts de position du détecteur infrarouge calculés par le système d'écartométrie M ; pour corriger ces défauts, le système d'écartométrie 15 envoie un signal d'écart à un circuit de commande d'alignement : soit un circuit de commande des moteurs de balayage site/gisement du carter 8, soit celui d'un miroir orientable du système optique de déport 12, par exemple un miroir monté sur cales piézoélectriques.

La seconde série de défauts d'ordre électronique résulte du niveau de signal vidéo transmis et contrôlé par visualisation sur l'écran 15. Il est ainsi possible de repérer directement le fonctionnement défectueux d'une cellule du détecteur infrarouge sur l'écran ou indirectement, par le test d'inversion du contraste noir/blanc, un défaut d'un élément de la chaîne de traitement électronique (échantillonneur, filtre, amplificateur).

L'invention n'est pas limitée au mode de réalisation décrit et représenté : le système d'observation infrarouge auto-contrôlé selon l'invention s'applique à tout système de surveillance infrarouge. En particulier, dans un système de surveillance infrarouge qui ne comporte pas de voie laser, et donc pas de hublot laser, il est nécessaire de prévoir un élément supplémentaire réfléchissant le rayonnement infrarouge monté sur le capot et, comme dans le système déjà décrit, les moyens de basculement du capot pour positionner le miroir perpendiculairement à la ligne de visée infrarouge pour l'auto-contrôle.

## Revendications

1. Système optronique d'observation infrarouge auto-contrôlé comprenant un hublot (HI) transparent au rayonnement dans une bande infrarouge et porté par un capot (5), un système optique (7, 12) de déflexion et de formation d'images infrarouges ayant une ligne de visée perpendiculaire à ce hublot (HI) et un détecteur sensible dans la bande infrarouge, caractérisé en ce qu'il comporte en outre un élément réfléchissant le rayonnement de ladite bande infrarouge monté sur le même capot (5) et des moyens de basculement du capot (5), de façon à positionner ledit élément d'entrée perpendiculairement à la ligne de visée pour effectuer l'auto-contrôle par renvoi de l'image du détecteur sur lui-même.

2. Système optronique selon la revendication 1, caractérisé en ce que le signal de détection infrarouge fourni par le détecteur infrarouge est visualisé sur un écran de visualisation (16) après conversion en signal vidéo dans un circuit de traitement électronique (17), en ce que le détecteur infrarouge est connecté également à un système d' écartométrie (15) pour mesurer l'écart de position entre l'image du détecteur telle que repérée et visualisée par le système optronique et celle d'une image de référence du détecteur telle que mémorisée par le système d'écartométrie (15), et en ce que le système d'écartomètrie (15) calcule et envoie des signaux d'écart aux moyens de déviation optique (7) et au circuit de traitement électronique (17).

3. Système optronique selon la revendication 2, caractérisé en ce que le système d'écartométrie (15) envoie un signal d'écart à un miroir de renvoi du système optique (12) de déport d'image.

4. Nacelle de désignation de cible par guidage laser comprenant une voie de détection infrarouge comportant un système optronique d'observation infrarouge auto-contrôlé selon l'une des revendications 1 à 3, et une voie de guidage laser, chacune de ces voies étant équipée d'un hublot d'entrée (HI et HL) d'un système de déflexion optique et de déport d'images (7, 12 et 6, 11) définissant une même ligne de visée pour les deux voies, et respectivement de moyens de formation d'images (CT) et d'émission laser (L), caractérisé en ce que l'élément réfléchissant le rayonnement de la bande infrarouge est le hublot (HL) de la voie laser basculé perpendiculairement à la ligne de visée pour l'auto-contrôle et en ce que le détecteur infrarouge équipe la caméra thermique (CT).

## Claims

1. Self-checked optronic system for infra-red observation comprising a port (HI) transparent to radiation in an infra-red band and borne by a hood (5), an optical system (7, 12) for the deflection and formation of infra-red images having a sighting line perpendicular to this port (HI) and a detector sensitive in the infra-red band, characterized in that it further comprises an element mounted on the same hood (5) and reflecting the radiation of said infra-red band, and means for tilting the hood (5) so as to position said input element perpendicularly to the sighting line to carry out the self-checking operation by sending back the image of the detector to itself.

2. Optronic system according to Claim 1, characterized in that the infra-red detection signal given by the infra-red detector is displayed on a display screen (16) after conversion into a video signal in an electronic processing circuit (17), and in that the infra-red detector is connected also to a deviation measurement system (15) to measure the deviation in position between the image of the detector as identified and displayed by the optronic system and that of a reference image of the detector as memorized by the deviation measurement system (15), and in that the deviation measurement system (15) computes and sends deviation signals to the optical deflection means (7) and to the electronic processing circuit (17).

3. Optronic system according to Claim 2, characterized in that the deviation measurement system (15) sends a deviation signal to a reflecting mirror of the image offset optical system (12).

4. Pod for the designation of targets by laser guidance, comprising an infra-red detection channel including a self-checked optronic system for infra-red observation according to one of Claims 1 to 3, and a laser guidance channel, each of these channels being fitted with an input port (HI and HL), an optical deflection and image offset system (7, 12 and 6, 11) defining one and the same sighting line for both channels, and respectively image formation means (TC) and laser transmission means (L), characterized in that the element reflecting the radiation of the infra-red band is the port (HL) of the laser channel tilted perpendicularly to the sighting line for the self-checking operation, and in that the infra-red detector is fitted to the thermal camera (TC).

## Patentansprüche

1. Optronisches Infrarot-Beobachtungssystem mit automatischer Ausrichtung mit einem Fenster (HI), das für eine Strahlung in einem Infrarotband durchlässig ist und von einer Haube (5) getragen ist, einem optischen System (7, 12) zum Ablenken und Bilden von Infrarotbildern mit einer optischen Achse, die senkrecht zu dem Fenster (HI) verläuft, und einem in dem Infrarotband empfindlichen Detektor, dadurch gekennzeichnet, daß es ferner ein die Strahlung in dem Infrarotband reflektierendes Element enthält, das auf der gleichen Haube (5) befestigt ist, und Mittel zum Kippen der Haube (5) in der Weise, daß das Eingangselement senkrecht zu der optischen Achse eingestellt wird, um die automatische Ausrichtung durch Zurückführen des Bildes des Detektors auf sich selbst zu bewirken.

2. Optronisches System nach Anspruch 1, dadurch gekennzeichnet, daß das von dem Infrarotdetektor gelieferte Infraroterfassungssignal auf einem Anzeigeschirm nach einer Umsetzung in ein Videosignal in einer elektronischen Verarbeitungsschaltung (17) angezeigt wird, daS der Infrarotdetektor auch an ein Entfernungsmeßsystem (15) zum Messen des Positionsabstandes zwischen dem Bild des Detektors entsprechend der Markierung und Anzeige durch das optronische System und einem Referenzbild des Detektors, wie es durch das Entfernungsmeßsystem (15) abgespeichert ist, angeschlossen ist, und daß das Entfernungsmeßsystem (15) Abstandssignale berechnet und zu den optischen Ablenkmitteln (7) und der elektronischen Verarbeitungsschaltung (17) überträgt.

3. Optronisches System nach Anspruch 2, dadurch gekennzeichnet, daß das Entfernungsmeßsystem (15) ein Abstandssignal zu einem Rückübertragungsspiegel des optischen Bildversatzsystems (12) schickt.

4. Lasergeführte Zielansprachezelle mit einem Infraroterfassungskanal, der ein optronisches Infrarotbeobachtungssystem mit Selbstausrichtung gemäß einem der Ansprüche 1 bis 3 und einen Laserführungskanal enthält, wobei jeder dieser Kanäle mit einem Eintrittsfenster (HI und HL) eines Systems zum optischen Ablenken und zum Versetzen von Bildern (7,12 und 6,11) ausgestattet ist, das für die zwei Kanäle die gleiche optische Achse definiert, sowie Bilderzeugungsmittel (CT) und Lasersendemittel (L) enthält, dadurch gekennzeichnet, daß das die Strahlung im Infrarotband reflektierende Element das Fenster (HL) des Laserkanals ist, das für die Selbstausrichtung senkrecht zur optischen Achse gekippt ist, und daß der Infrarotdetektor ein Teil der thermischen Kamera (CT) ist.
